(19) Europäisches Patentamt
European Patent Office
Office européen des brevets

(11) EP 0 564 634 B1

(12) EUROPEAN PATENT SPECIFICATION

(45) Date of publication and mention
of the grant of the patent:
03.01.1996 Bulletin 1996/01

(51) Int Cl.⁶: G02B 15/177

(21) Application number: 92922633.0

(22) Date of filing: 15.10.1992

(86) International application number:
PCT/US92/08803

(87) International publication number:
WO 93/09458 (13.05.1993 Gazette 1993/12)

(54) **ZOOM VIEWFINDER**

ZOOMSUCHER

VISEUR POUR ZOOM

(84) Designated Contracting States:
GB

(30) Priority: 28.10.1991 US 783588
01.09.1992 US 938798
01.09.1992 US 938966

(43) Date of publication of application:
13.10.1993 Bulletin 1993/41

(73) Proprietor: **EASTMAN KODAK COMPANY**
**Rochester, New York 14650-2201 (US)**

(72) Inventors:
• **LEWIS, Alan, Edward**
**Rochester, NY 14606 (US)**
• **RUBEN, Paul, Lewis**
**Penfield, NY 14526 (US)**

(74) Representative:
**Blickle, K. Werner, Dipl.-Ing. et al**
**D-70323 Stuttgart (DE)**

(56) References cited:
US-A- 4 725 130        US-A- 4 757 336
US-A- 4 854 680

• **PATENT ABSTRACTS OF JAPAN vol. 10, no.**
**322 (P-511)(2378) 31 October 1986 & JP-A-61**
**128 220**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to viewfinders generally, and more specifically to zoom viewfinders.

U.S. Patents 4,725,130 and 4,854,680 each describe a 3-unit Galilean-type zoom viewfinder. The finders disclosed in the above-mentioned patents all have a minus-plus-minus configuration. In these finders, the positive lens unit always moves for zooming, while the two negative lens units are stationary. U.S. Patent 4,725,130 also discloses that the first negative lens unit may also move for zooming.

The inherent problem with this approach is that when the above minus-plus-minus component configuration is used and only the single positive unit is moved for zooming, the zoom finder suffers from defocusing, i.e. the image plane of focus of the lens moves. To accommodate this defocus, the lens of the observer's eye has to constantly adjust itself as the viewfinder zooms. Although, as disclosed in U.S. Patent 4,725,130, the movement of the first lens unit in conjunction with the second lens unit can rectify this problem, a design modification such as this would loose an advantage of having fixed (i.e. stationary) outer lens elements. In addition, U.S. Patents 4,725,130 and 4,854,680 do not identify the location of the field stop. If the field stop is assumed to be the clear aperture of the front most lens element, then the value of margin for the disclosed viewfinders will not remain constant throughout the zoom range.

Reverse Galilean-type viewfinders which include a projected frame or reticle easily delineate the field of view. When we eliminate the reticle or the frame, controlling the field of view becomes more difficult. Merely changing magnification does not guarantee that as we zoom we will see the correct field of view (FOV), because the aperture (window) that limits the FOV may appear to change size resulting in a variation in the apparent FOV. Having a fixed location field stop (i.e. framing window) with a variable aperture may solve this problem, but at the expense of the system's compactness. Finally, if the optical system in a viewfinder has system distortion and pupil distortion, the field of view will not be properly delineated. An optical designer often attempts to eliminate the system distortion, but that comes at the expense of not minimizing other aberrations. In addition, pupil distortion may cause the clipping of the edges in the field of view if the aperture of the field stop (i.e. framing window) is of the conventional rectangular shape.

## DISCLOSURE OF THE INVENTION

It is therefore an object of the present invention to create a zoom finder (viewfinder) which has stationary outer elements in order to protect the (internal) zoom mechanism from dust and other contaminants.

It is another object of this invention to create a virtual image zoom finder having constant axial accommodation.

The above and other objects are achieved by a zoom finder comprising in order from an object side, a stationary first lens unit having negative refractive power, a movable second lens unit having negative refractive power, a movable third lens unit having positive refractive power and a stationary fourth lens unit having negative refractive, the second and the third units being movable for zooming.

It is yet another object of this invention to control the field of view in a viewfinder without compromising its compactness. This object of the invention and other objects are achieved by providing a fixed aperture field stop (i.e. framing window) that is movable during zooming between two of the lens elements controlling the field of view.

According to one aspect of the present invention, the field stop has fixed size aperture opening with curved sides for providing a rectangular field of view.

According to yet another aspect of the present invention, the apparent shape of the field stop (or the framing window) aperture is controlled by having an actual aperture shape and size of the framing window to match the distortion of the optical system.

## BRIEF DESCRIPTION OF DRAWINGS

Figures 1A-C is a side view of a zoom viewfinder that forms a first embodiment of the invention in a wide angle, an intermediate and a telephoto position;
Figure 2 shows the margin control for the side of the format of the first embodiment;
Figure 3 is a side view of a zoom viewfinder that forms a second embodiment of the invention;
Figure 4 shows the margin control for the side of the format of the second embodiment; and
Figure 5 shows the shape of the aperture (i.e. framing window) of the second embodiment.

## BEST MODE OF CARRYING OUT THE INVENTION

The lens system of the present invention has a general application to optical systems employing zoom viewfinders. An example of such application is a viewfinder suitable for use in compact cameras. In order to provide a concise description of the preferred embodiment, certain details of the viewfinder and camera in which it may be used are not described herein but are selectable from the prior art.

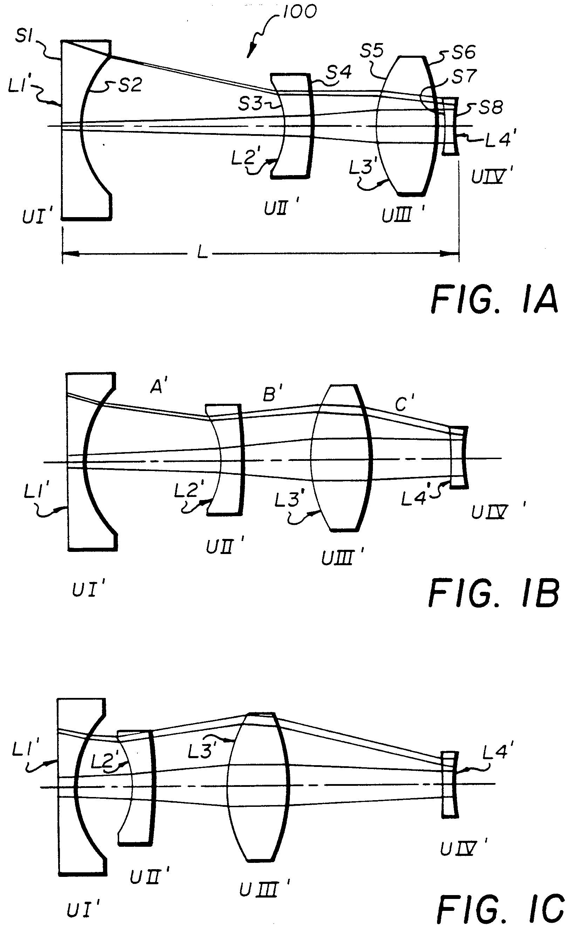

The lens system forming the viewfinder of the first embodiment of the present invention will now be described with reference being made to the accompanying figure 1. The lens system 100 is characterized by an unusually large half field angle (in a wide angle mode) of 33 degrees, 2X zoom range and compactness in both length and front (object side) aperture. The viewfinder has high image quality and low distortion. The outer elements of the zoom finder are fixed in position. This is helpful for keeping dust and dirt out of the mechanism. The lens system 100 contains four optical units UI', UII', UIII' and UIV' with air spaces A', B' and C' between these units. Constant axial accommodation is achieved by use of two internal differentially moving (i.e. moving at different rates) optical units UII' and UIII'. Thus, as UII' and UIII' move relative to UI' during zooming, UII' also moves relative to UIII'.

Following from the object to pupil location the lens units are: A negative power lens unit UI', which is stationary (i.e. it does not move for zooming); a negative optical unit UII', movable along the optical axis for zooming; a positive optical unit UIII' also movable along the optical axis for zooming; and a stationary negative power optical unit UIV'. The function of the front, negative optical unit UI' is to expand the beam diameter as it enters the viewfinder and to correct distortion. Having the first optical unit UI' and the second optical unit UII' near each other allows coverage of the largest possible angle in a wide angle mode. This is done by virtue of bringing a negative unit UII' from the back of the optical system towards the front of the optical system thus allowing more negative power towards the front in order to have maximum angular coverage. The positive power optical unit UIII' is movable for zooming and is used for compensating for the drift in the position of the virtual image as seen by the eye of the observer. It is located towards the rear of the optical system in order to minimize the beam diameter. Finally, having a negative rear unit UIV', rather than it being positive, permits the positive unit UIII' to be made stronger, so that the optical unit UIII' does not have to travel as far to achieve full zooming. In addition, the stationary unit UIV' protects zooming groups from the foreign particular matter. The combination of units UIII' and UIV' act as an eyepiece in re-imaging the light to the eye. More specifically, the first lens unit UI' comprises a negative lens element L1' with a stronger curvature oriented towards a pupil position; the second lens unit UII' comprises a negative meniscus lens element L2' with a concave surface oriented toward to the first lens unit; the third lens unit UIII' comprises a positive biconvex lens element L3'; and the fourth lens unit UIV' comprises a negative biconcave lens element L4'. All of the lens elements were made of plastic to make the production of the viewfinder relatively inexpensive. The numerical data for the optical system 100 are as follows:

## TABLE 1

| Surface | Clear Apertures | | Radius | Thickness | Material | |
|---|---|---|---|---|---|---|
| | Top-Bottom | Side-Side | | | N | V |
| S1 | 7.76 | 12.30 | -463.009 | 1.500 | 1.492 | 574 |
| S2 | 6.77 | 10.28 | ASPHERE | A' | | |
| S3 | 4.19 | 6.96 | -7.58810 | 1.700 | 1.535 | 405 |
| S4 | 4.58 | 7.82 | ASPHERE | B' | | |
| S5 | 5.85 | 10.50 | 11.8290 | 4.670 | 1.492 | 574 |
| S6 | 5.67 | 10.25 | ASPHERE | C' | | |
| S7 | 3.10 | 3.99 | -38.1935 | 1.200 | 1.535 | 405 |
| S8 | 3.00 | 3.61 | 44.2280 | | | |

FINDER LENGTH = 32.000

ASPHERIC EQUATION:

$$SAG = X = \frac{CY^2}{1 + \sqrt{1 - (k + 1)C^2Y^2}} + DY^4 + EY^6 + FY^8 + GY^{10} + HY^{12}$$

SURFACE S2
- C = .13752171
- k = -.95070186
- D = -.7956792E-04
- E = -.9262375E-05
- F = .3713080E-06
- G = -.6640295E-08
- H = .4424682E-10

SURFACE S4
- C = -.02107171
- k = -144.581545
- D = -.2195530E-03
- E = .5259288E-05
- F = -.4358199E-06
- G = .8890752E-08
- H = -.6878591E-10

SURFACE S6
- C = -.07742708
- k = -4.31725012
- D = .3499638E-04
- E = .2616992E-05
- F = -.1173125E-07
- G = -.1292248E-09
- H = .1088147E-11

### AIR SPACE:

| MAG. | A' | B' | C' |
|---|---|---|---|
| .275 | 16.614 | 5.816 | .500 |
| .382 | 10.836 | 5.499 | 6.595 |
| .529 | 4.434 | 5.949 | 12.547 |

The space B' between the optical units UII' and UIII' in the above embodiment is about 17% of the total finder length. This appears to allow for superior performance for this type of lens system while maintaining the compactness of the overall system. The movement of UII' and UIII' relative to each other and to the stationary units UI' and UIV' provides a virtual image plane that is stationary and thus there is no need for the eye to adjust its focus as the finder is zooming. If the spacing B' between units UII' and UIII' is kept constant so that these inner units move together at the same rate (for simplified mechanical considerations), the axial accommodation will vary with zoom position, but the image will still be viewable.

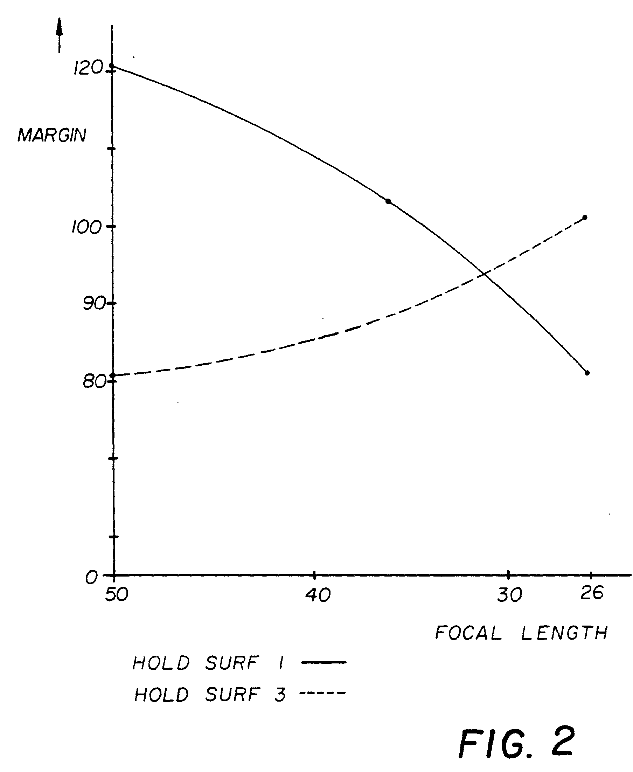

In the optical system 100, the field of view may be controlled by the aperture of the lens element L1' in the wide .angle mode of operation (see Fig. 1A). The aperture of the lens element is defined by the periphery of the optically transparent portion of the lens element or an opaque wall of the element mount, whichever is smaller. In the telephoto mode (Fig. 1C), an aperture on lens element L2' may be used to control the field of view. However, in the intermediate zoom positions, one of these two limiting apertures delineates the field of view, but the apparent field of view varies from its value at the two extreme zoom positions (see Fig. 2 illustrating margin control). If accurate control of the apparent FOV is desired, a variable size aperture can be placed near the front of the viewfinder as far from the eye as possible to control the apparent field of view. However, the mechanism to change the aperture size would require the front of the viewfinder to become larger in diameter which may work against a required goal of compactness. A better way to control the apparent field of view in a reversed Galilean-type viewfinder is disclosed in the discussion of the second embodiment.

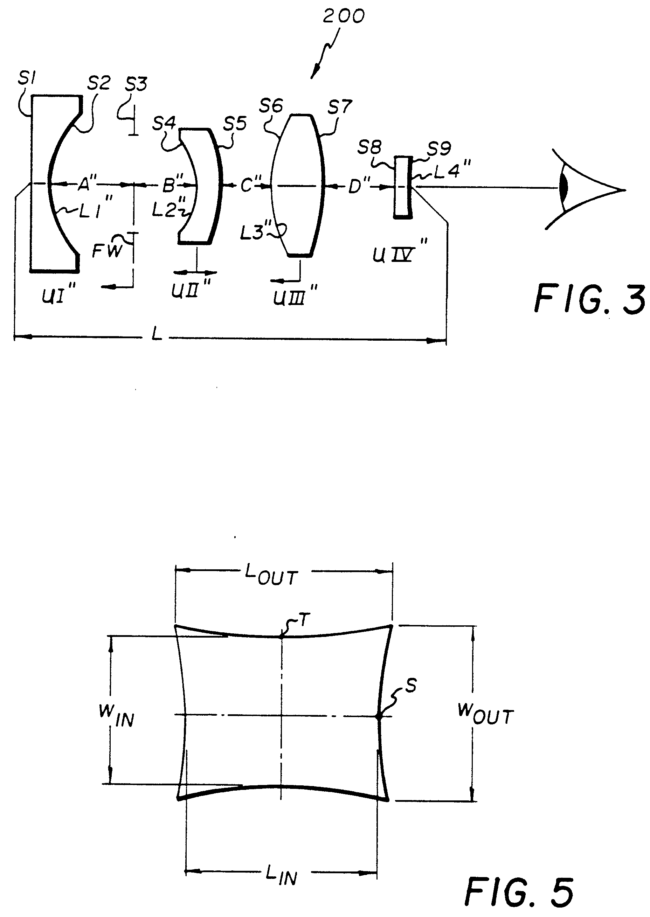

The lens system 200 of the second embodiment of the present invention is illustrated in Fig. 3. The lens system 200 is very similar to lens system 100 described above, but in addition comprises a moving field stop (framing window) FW between a negative power unit UI" and a negative movable optical unit UII". The lens system 200 contains four airspaces A", B", C", and D" between the optical unit UI", the framing window FW, the optical unit UII", the positive optical unit UIII", and the optical unit UIV", respectively. The numerical data for optical system 200 is as follows:

## TABLE 2

| Surface | Clear Apertures Top-Bottom | Side-Side | Radius | Thickness | Material N | V |
|---|---|---|---|---|---|---|
| S1 | 8.64 | 12.59 | 469.668 | 1.500 | 1.492 | 574 |
| S2 | 6.90 | 10.08 | ASPHERE | A" | | |
| S3 | | | WINDOW | B" | | |
| S4 | 4.74 | 7.22 | ASPHERE | 1.700 | 1.535 | 405 |
| S5 | 5.37 | 8.22 | -13.6721 | C" | | |
| S6 | 6.67 | 10.38 | 12.4215 | 4.380 | 1.492 | 574 |
| S7 | 6.51 | 10.15 | ASPHERE | D" | | |
| S8 | 3.00 | 4.61 | -121.781 | 1.200 | 1.535 | 405 |
| S9 | 2.94 | 4.25 | 22.0597 | | | |

FINDER LENGTH = 32.000

**ASPHERIC EQUATION:**

$$X = \frac{CY^2}{1 + \sqrt{1 - (k + 1)C^2Y^2}} + DY^4 + EY^6 + FY^8 + GY^{10}$$

| SURFACE S2 | | | | |
|---|---|---|---|---|
| | C = | .14761 | E = | .12428E-05 |
| | k = | -.87442 | F = | -.12197E-07 |
| | D = | -.20684E-03 | G = | .84344E-10 |

| SURFACE S4 | | | | |
|---|---|---|---|---|
| | C = | -.16584 | E = | .45545E-05 |
| | k = | -1.57580 | F = | .69169E-07 |
| | D = | -.72436E-03 | G = | .15309E-10 |

| SURFACE S7 | | | | |
|---|---|---|---|---|
| | C = | -.07622 | E = | .11410E-05 |
| | k = | -2.67459 | F = | -.14805E-07 |
| | D = | .13448E-03 | G = | .57856E-10 |

### ZOOM THICKNESSES:

| MAG. | A" | B" | C" | D" |
|---|---|---|---|---|
| .286 | 11.454 | 6.432 | 4.834 | 0.500 |
| .389 | 7.147 | 5.541 | 4.435 | 6.097 |
| .530 | 4.026 | 2.500 | 4.962 | 11.732 |

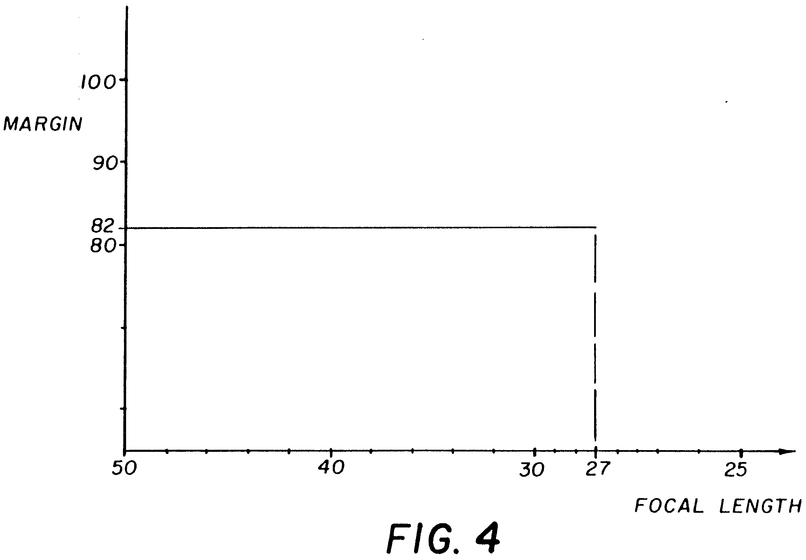

It was discovered that the placement of a movable field stop (i.e. framing window) FW having a fixed size aperture within the lens system controls the margin in the intermediate zooming positions (see Fig. 4). Margin represents the percentage of the FOV of the final photographic print that is seen through the finder. Margin control accommodates a variety of manufacturing and processing errors to assure that everything seen through the viewfinder will be contained in the final photograph. In this embodiment, a moving framing window FW was placed between a negative power unit UI" and a negative movable optical unit UII".

The position of this moving field stop (or framing window) is chosen to be as far from the eye as possible to improve the sharpness of the edges of the field as defined by the aperture of the framing window FW. The moving framing window FW controls the field of view in all zoom positions to the desired 82% margin for the side of the format. The aperture shape of the framing window is illustrated in Fig. 5 and has a "pin-cushion shape" of the following dimensions:

$$W_{in} = 4.452;\ W_{out} = 4.778;\ L_{in} = 6.910;\ L_{out} = 7.200,$$

where W is the width and L is the length of the framing window aperture. Keeping the system distortion (of the lens system 200) throughout the zoom range of the same sign and similar in magnitude helps to keep the desired apparent window aperture shape (defining the rectangular field of view) the same through the zoom range. The lens system 200 has maximum absolute value of system distortion of from 2.4% to 2.9% distortion at the edge of the field. Having residual distortion is not necessary for the fixed size moving framing window concept to work. However, even when there is some system distortion present through the zoom range, matching the shape of the framing window aperture to the pupil distortion enables one to maintain a constant rectangular shape as seen by the eye (i.e. a constant rectangular object side FOV). Although the lens format determines the field of view and thus the basic size of the field stop (i.e. framing window) aperture, it is pupil distortion and system distortion that effects the shape of the framing window's aperture.

In a Reverse-Galilean viewfinder, the negative lens out front will typically introduce a positive (i.e. pin-cushion shape) pupil distortion and thus the aperture of the field stop (i.e. framing window aperture) will typically be of a pin-cushion shape. This is especially true if the system distortion amount is -3% to +3%. Positive system distortion will make the pin-cushion shape of the aperture of the framing window (also called framing window aperture) more pronounced, negative system distortion makes the pin-cushion shape of the aperture mask less pronounced. The function of the field mask is to simply delineate the field of view. The shape of the field stop aperture (i.e. framing window aperture) does not effect the system distortion. Since the overall optical system still has distortion, the viewing scene (buildings, etc.) may still appear distorted if the optical system has a large amount of distortion (i.e. >|4%|). However, the shape of the field stop aperture does effect the shape of the field. If the field stop aperture is rectangular and the optical system suffers from the pupil distortion, the viewer may not see the entire field of view.

For example, in the preferred embodiment, the front negative lens element introduces a positive pupil distortion. If the aperture of the framing window is rectangular shaped, it will cut out (i.e. vignette) the light coming through the corners, thus, darkening the edges of the field. Thus, we compensated for the pupil distortion (as measured from the eye) caused by the strong negative front element by allowing the entire field of view to be unvignetted. This is done by making the aperture of the field stop of a pin-cushion shape. Of course, in a different viewfinder system, a front element may be positive and thus may introduce a strong negative (i.e. barrel-shaped pupil distortion), thus necessitating a different shape field stop aperture. We arrived at the proper shape of the field stop aperture by following a procedure knowing the format size of the system and thus knowing the field of view:

A. Three extreme rays were traced through the system backward from the eye. These rays corresponded to the top, side and the corner field of view and were traced for the 3 zoom positions. First, the rays corresponding to the top T and the side S (see Fig. 5) of the format were traced. They were verified by their exiting angles (which must equal to the top and side half field of view) as the proper field rays. It was also verified that the two extreme top and side rays intersected the surface corresponding to the framing window at the same location along the optical axis. These intersections correspond to the framing window's aperture at mid-top and mid-side points. Next, a three-dimensional ray trace of the corner ray was done. The ray was traced from the corner of the eye pupil at an angle determined by the format of the FOV of the camera. When the corner ray emerged out of the optical system, the horizontal and vertical components of the angle of the emerging ray should be the same as for the top and the side rays. If these components do not match the exiting angles for the top and the side rays, the slightly different ray has to be traced again. This iterative process has to be repeated until the corner ray components substantially match those of the top and side ray.

B. The coordinates of the corner ray at the framing window location should then be determined. The coordinates define the location of the corners for the field mask.

C. Once the location of the framing window's mid-top, mid-side and corner coordinates are known, we can connect them (by assuming that a circle defines the curve that connects them together).

D. In a non-zooming viewfinder, or in a viewfinder system that has little distortion (as shown in a preferred embodiment), this procedure defines the shape of the aperture of the framing window. In a zooming viewfinder that has a wide range of system distortion, one may have to take the average coordinates (for the top, corner and the side rays) from the two extreme zoom positions and use them to define the (field stop) shape of framing window aperture.

Fig. 4 shows the margin for the side of the format in lens system 200 assuming only the moving field stop aperture (or framing window aperture) determines the FOV. The top and bottom margin is also precisely controlled. Thus, for lens system 200, the entire apparent field of view is precisely controlled by moving a framing window having a fixed size aperture.

Although in the preferred embodiment each optical unit corresponds to a single lens element or lens component, in a modification one may split one or more of these lens components into two or more optical elements or components.

Finally, although each of the lens elements in the preferred embodiment was made of plastic, in a modification one may design the viewfinder with one or more glass lens elements.

The invention has been described in detail with particular reference to a preferred embodiment thereof, but it will be understood that variations and modifications can be effected within the scope of the invention.

**Claims**

1. A zoom finder comprising in order from an object side, a stationary first lens unit (UI'; UI") having negative refractive power, a movable second lens unit (UII'; UII") having negative refractive power, a movable third lens unit (UIII'; UIII") having positive refractive power and a stationary fourth lens unit (UIV'; UIV") having negative refractive power, said second and third units (UII' and UIII'; and UIII" and UIII") being movable for zooming.

2. A zoom finder according to claim 1, wherein each lens element is made out of a plastic material.

3. A zoom finder according to claim 2, wherein the minimum space (B'; C") between said second lens unit and said third lens unit is about 17% of the total length of said zoom finder.

4. A zoom finder according to claim 1 comprising the following design parameters

| | Clear Apertures | | | | Material | |
|---|---|---|---|---|---|---|
| Surface | Top-Bottom | Side-Side | Radius | Thickness | N | V |
| S1 | 7.76 | 12.30 | -463.009 | 1.500 | 1.492 | 574 |
| S2 | 6.77 | 10.28 | ASPHERE | A' | | |
| S3 | 4.19 | 6.96 | -7.58810 | 1.700 | 1.535 | 405 |
| S4 | 4.58 | 7.82 | ASPHERE | B' | | |
| S5 | 5.85 | 10.50 | 11.8290 | 4.670 | 1.492 | 574 |
| S6 | 5.67 | 10.25 | ASPHERE | C' | | |
| S7 | 3.10 | 3.99 | -38.1935 | 1.200 | 1.535 | 405 |
| S8 | 3.00 | 3.61 | 44.2280 | | | |

FINDER LENGTH = 32.000

**ASPHERIC EQUATION:**

$$SAG = X = \frac{CY^2}{1 + \sqrt{1 - (k + 1)C^2Y^2}} + DY^4 + EY^6 + FY^8 + GY^{10} + HY^{12}$$

**SURFACE S2**
C = .13752171      F = .3713080E-06
k = -.95070186     G = -.6640295E-08
D = -.7956792E-04   H = .4424682E-10
E = -.9262375E-05

**SURFACE S4**
C = -.02107171     F = -.4358199E-06
k = -144.581545    G = .8890752E-08
D = -.2195530E-03   H = -.6878591E-10
E = .5259288E-05

**SURFACE S6**
C = -.07742708     F = -.1173125E-07
k = -4.31725012    G = -.1292248E-09
D = .3499638E-04    H = .1088147E-11
E = .2616992E-05

**AIR SPACE:**

| MAG. | A' | B' | C' |
| --- | --- | --- | --- |
| .275 | 16.614 | 5.816 | .500 |
| .382 | 10.836 | 5.499 | 6.595 |
| .529 | 4.434 | 5.949 | 12.547 |

5. A zoom finder according to claim 1 wherein a space between said second lens unit (UII'; UII") and said third lens unit (UIII'; UIII") varies for zooming.

6. A zoom finder according to claim 5 wherein a space between said first and said second lens unit (UI', UII'; UI", UII") and a space between said third and said fourth lens units UIII', UIV'; UIII", UIV") are varied during zooming

7. A zoom finder according to claim 6 further having lens elements with aspherical surfaces.

8. A zoom finder according to claim 7 wherein: said first lens unit (UI'; UI") comprises a negative lens element (L1'; L1") which has its strongest curvature oriented towards the second lens unit;

    said second lens unit (UII'; UII") comprises a negative meniscus lens element (L2'; L2") with a concave surface oriented toward the first lens unit;
said third lens unit comprises a positive biconvex lens element (L3'; L3"); and
said fourth lens unit comprises a negative biconcave lens element (L4'; L4").

9. A zoom finder according to claim 5 or 8 wherein during zooming the image plane remains substantially constant, thus requiring no accommodation from the eye.

10. A zoom finder according to claim 5 further comprising a movable field stop, or framing window (FW), said field stop or framing window having a fixed size aperture and located within said zoom finder between two lens units.

11. A zoom finder according to claim 10, wherein said second and third units (UII"; UIII") being differentially movable for zooming and said field stop (FW) being movable for control of the apparent field of view.

12. A zoom finder according to claim 10 wherein the distortion is matched through the zoom range to the movable field stop aperture or window shape so as to maintain a constant rectangular object side field of view.

13. A zoom finder according to claim 11 wherein said field stop or framing window (FW) has a pin-cushion shape aperture.

**Patentansprüche**

1. Zoom-Sucher, der, aus der Richtung eines Aufnahmegegenstandes gesehen, nacheinander eine ortsfeste erste Linse (UI'; UI") mit negativer Brechkraft, eine bewegbare zweite Linse (UII'; UII") mit negativer Brechkraft, eine bewegbare dritte Linse (UIII'; UIII") mit positiver Brechkraft und eine ortsfeste vierte Linse (UIV'; UIV") mit negativer Brechkraft aufweist, wobei die zweite und dritte Linse zum Verändern der Brennweite bewegbar sind.

2. Zoom-Sucher nach Anspruch 1, dadurch gekennzeichnet, daß jede Linse aus Kunststoff besteht.

3. Zoom-Sucher nach Anspruch 2, dadurch gekennzeichnet, daß der Mindestabstand (B'; C") zwischen der zweiten und dritten Linse etwa 17% der Gesamtlänge des Zoom-Suchers beträgt.

4. Zoom-Sucher nach Anspruch 1, gekennzeichnet durch folgende Merkmale

## Freie Öffnungen

| Fläche | oben/ unten | Seite/ Seite | Radius | Dicke | Material N | V |
|--------|------|------|---------|-------|-----|-----|
| S1 | 7,76 | 12,30 | -463,009 | 1,500 | 1,492 | 574 |
| S2 | 6,77 | 10,28 | asphärisch | A' | | |
| S3 | 4,19 | 6,96 | -7,58810 | 1,700 | 1,535 | 405 |
| S4 | 4,58 | 7,82 | asphärisch | B' | | |
| S5 | 5,85 | 10,50 | 11,8290 | 4,670 | 1,492 | 574 |
| S6 | 5,67 | 10,25 | asphärisch | C' | | |
| S7 | 3,10 | 3,99 | -38,1935 | 1,200 | 1,535 | 405 |
| S8 | 3,00 | 3,61 | 44,2280 | | | |

SUCHERLÄNGE = 32,000

**ASPHÄRISCHE GLEICHUNG:**

$$SAG = X = \frac{CY^2}{1+\sqrt{1-(k+1)C^2Y^2}} + DY^4 + EY^6 + FY^8 + GY^{10} + HY^{12}$$

| FLÄCHE S2 | | |
|---|---|---|
| C = 0,13752171 | F = 0,3713080E-06 |
| k = -0,95070186 | G = -0,6640295E-08 |
| D = -0,7956792E-04 | H = 0,4424682E-10 |
| E = -0,9262375E-05 | |

| FLÄCHE S4 | | |
|---|---|---|
| C = -0,02107171 | F = -0,4358199E-06 |
| k = -144,581545 | G = 0,8890752E-08 |
| D = -0,2195530E-03 | H = -0,6878591E-10 |
| E = 0,5259288E-05 | |

| FLÄCHE S6 | | |
|---|---|---|
| C = -0,07742708 | F = -0,1173125E-07 |
| k = -4,31725012 | G = -0,1292248E-09 |
| D = 0,3499638E-04 | H = 0,1088147E-11 |
| E = 0,2616992E-05 | |

**LUFTABSTÄNDE:**

| Vergrößerung | A' | B' | C' |
|---|---|---|---|
| 0,275 | 16,614 | 5,816 | 0,500 |
| 0,382 | 10,836 | 5,499 | 6,595 |
| 0,529 | 4,434 | 5,949 | 12,547 |

**5.** Zoom-Sucher nach Anspruch 1, dadurch gekennzeichnet, daß sich die Abstände zwischen der zweiten (UII'; UII") und dritten Linse (UIII'; UIII") beim Zoomen verändern.

**6.** Zoom-Sucher nach Anspruch 5, dadurch gekennzeichnet, daß sich der Abstand zwischen der ersten und zweiten Linse (UI', UII'; UI", UII") und der Abstand zwischen der dritten und vierten Linse (UIII', UIV'; UIII", UIV") beim Zoomen verändert.

**7.** Zoom-Sucher nach Anspruch 6, dadurch gekennzeichnet, daß die Linsen asphärische Flächen aufweisen.

**8.** Zoom-Sucher nach Anspruch 7, dadurch gekennzeichnet, daß

die erste Linse (UI'; UI") ein negatives Linsenelement (LI'; LI") aufweist, dessen stärkste Krümmung zur zweiten

11

Linse weist,
die zweite Linse (UII'; UII") einen negativen Meniskus (L2'; L2") aufweist, dessen konkave Fläche zur ersten Linse weist,
die dritte Linse ein positives bikonvexes Linsenelement (L3'; L3") aufweist und
die vierte Linse ein negatives bikonkaves Linsenelement (L4'; L4") aufweist.

9. Zoom-Sucher nach Anspruch 5 oder 8, dadurch gekennzeichnet, daß die Bildebene während des Zoomens im wesentlichen konstant bleibt, so daß keine Augenakkommodation erforderlich ist.

10. Zoom-Sucher nach Anspruch 5, dadurch gekennzeichnet, daß eine bewegbare Sucherfeldmaske oder Sucherbildbegrenzung (FW) fester Größe vorgesehen und innerhalb des Zoom-Suchers zwischen zwei Linsen angeordnet ist.

11. Zoom-Sucher nach Anspruch 10, dadurch gekennzeichnet, daß die zweite und dritte Linse (UII"; UIII") beim Zoomen unterschiedliche Bewegungen ausführen und die Sucherfeldmaske (FW) zur Bestimmung des jeweiligen Sucherbildfelds bewegbar ist.

12. Zoom-Sucher nach Anspruch 10, dadurch gekennzeichnet, daß die Sucherfeldmaske oder Sucherbildbegrenzung zum Ausgleichen der Sucherverzeichnung eine solche Geometrie besitzt, daß das Sucherbild über den gesamten Zoom-Bereich konstant eine Rechteckform beibehält.

13. Zoom-Sucher nach Anspruch 11, dadurch gekennzeichnet, daß die Sucherfeldmaske oder Sucherbildbegrenzung (FW) eine kissenförmige Geometrie besitzt.

**Revendications**

1. Viseur zoom comprenant dans l'ordre, en partant du côté objet, une première unité de lentille fixe (UI' ; UI") présentant un pouvoir réfringent négatif, une seconde unité de lentille mobile (UII' ; UII") présentant un pouvoir réfringent négatif, une troisième unité de lentille mobile (UIII' ; UIII") présentant un pouvoir réfringent positif et une quatrième unité de lentille fixe (UIV' ; UIV") présentant un pouvoir réfringent négatif, lesdites seconde et troisième unités (UII' et UIII', et UII" et UIII") étant mobiles pour un changement de focale.

2. Viseur zoom selon la revendication 1, dans lequel chaque élément de lentille est fabriqué d'un matériau de plastique.

3. Viseur zoom selon la revendication 2, dans lequel l'espace minimum (B', C") entre ladite seconde unité de lentille et ladite troisième unité de lentille constitue environ 17 % de la longueur totale dudit viseur pour zoom.

4. Viseur zoom selon la revendication 1, comprenant les paramètres de conception suivants

<pre>
        Ouvertures utiles

               Haut-    De côté                                  Matériau
     Surface   bas      à côté     Rayon       Epaisseur     N       V

       S1      7,76     12,30     -463,009      1,500      1,492    574
       S2      6,77     10,28     ASPHERIQUE      A'
       S3      4,19      6,96     -7,58810       1,700      1,535    405
       S4      4,58      7,82     ASPHERIQUE      B'
       S5      5,85     10,50     11,8290        4,670      1,492    574
       S6      5,67     10,25     ASPHERIQUE      C'
       S7      3,10      3,99     -38,1935       1,200      1,535    405
       S8      3,00      3,61     44,2280

                              LONGUEUR DU VISEUR = 32,000
</pre>

EQUATION ASPHERIQUE :

$$SAG = X = \frac{CY^2}{1 + \sqrt{1 - (k + 1)C^2Y^2}} + DY^4 + EY^6 + FY^8 + GY^{10} + HY^{12}$$

SURFACE S2      C = 0,13752171      F = 0,3713080E-06

k = - 0,95070186      G = -0,6640295E-08

D = -0,7956792E-04      H = 0,4424682E-10

E = -0,9262375E-05

SURFACE S4      C = -0,02107171      F = - 0,4358199E-06

k = -144,581545      G = 0,8890752E-08

D = -0,2195530E-03      H = -0,6878591E-10

E = 0,5259288E-05

SURFACE S6      C = -0,07742708      F = - 0,1173125E-07

k = -4,31725012      G = -0,1292248E-09

D = 0,3499638E-04      H = 0,1088147E-11

E = 0,2616992E-05

ESPACEMENT D'AIR

| GROSS. | A' | B' | C' |
|---|---|---|---|
| 0,275 | 16,614 | 5,816 | 0,500 |
| 0,382 | 10,836 | 5,499 | 6,595 |
| 0,529 | 4,434 | 5,949 | 12,547 |

**5.** Viseur zoom selon la revendication 1 dans lequel un espace entre ladite seconde unité de lentille (UII', UII") et ladite troisième unité de lentille (UIII', UIII") varient pour le changement de focale.

**6.** Viseur zoom selon la revendication 5 dans lequel un espace entre ladite première et ladite seconde unités de lentille (UI', UII' ; UI", UII") et un espace entre ladite troisième et ladite quatrième unités de lentille (UIII', UIV' ; UIII", UIV") sont modifiés pendant le changement de focale.

**7.** Viseur zoom selon la revendication 6 comprenant en outre des éléments de lentille avec des surfaces asphériques.

**8.** Viseur zoom selon la revendication 7 dans lequel : ladite première unité de lentille (UI' ; UI") est constituée d'un élément de lentille négative (L1' ; L1") qui présente sa courbure la plus forte orientée vers la seconde unité de lentille,

ladite seconde unité de lentille (UII' ; UII") est constituée d'un élément de lentille à ménisque négatif (L2' ; L2") avec une surface concave orientée vers la première unité de lentille,
ladite troisième unité de lentille est constituée d'un élément de lentille biconvexe positive (L3' ; L3"), et
ladite quatrième unité de lentille est constituée d'un élément de lentille biconcave négative (L4' ; L4").

**9.** Viseur zoom selon la revendication 5 ou la revendication 8 dans lequel le plan image reste pratiquement constant pendant le changement de focale en ne nécessitant ainsi aucune accommodation de l'oeil.

10. Viseur zoom selon la revendication 5 comprenant en outre un diaphragme de champ mobile, ou fenêtre de cadrage (FW), ledit diaphragme de champ ou fenêtre de cadrage présentant une ouverture de taille fixe et étant situé à l'intérieur dudit viseur pour zoom entre deux unités de lentille.

11. Viseur zoom selon la revendication 10, dans lequel lesdites seconde et troisième unités (UII" ; UIII") sont mobiles de façon différentielle pour le changement de focale et ledit diaphragme de champ (FW) est mobile pour la commande du champ de vision apparent.

12. Viseur zoom selon la revendication 10 dans lequel la distorsion est adaptée sur toute la plage du zoom à l'ouverture du diaphragme de champ mobile ou à la forme de la fenêtre de façon à conserver un champ de vision rectangulaire constant du côté de l'objet.

13. Viseur zoom selon la revendication 11 dans lequel ledit diaphragme de champ ou ladite fenêtre de cadrage (FW) présente une ouverture en forme de pelote à épingles.

FIG. IA

FIG. IB

FIG. IC

FIG. 2

FIG. 3

FIG. 5

17

EP 0 564 634 B1

MARGIN

100

90

82
80

50          40          30  27          25

FOCAL LENGTH

# FIG. 4